# FASCICULE DE BREVET EUROPEEN

(11) **EP 3 221 154 B1**
(45) Date de publication et mention de la délivrance du brevet: **27.10.2021**
(21) Numéro de dépôt: 15805590.5
(22) Date de dépôt: 18.11.2015
(51) Int. Cl.: B43K 29/00, G06F 3/0354

(54) **DISPOSITIF MANUEL COMPRENANT UN EMBOUT INVERSABLE POUR ECRAN CAPACITIF**
MANUELLE VORRICHTUNG MIT EINEM UMKEHRBAREN ENDSTÜCK FÜR EINEN KAPAZITIVEN SCHIRM
MANUAL DEVICE COMPRISING A REVERSIBLE END PIECE FOR A CAPACITIVE SCREEN

(30) Priorité: 19.11.2014 FR 1461209
(43) Date de publication de la demande: 27.09.2017
(73) Titulaire: Société BIC, 92110 Clichy (FR)
(72) Inventeur: MALINVERNI, Samuel, 75018 Paris (FR); BEZ, Arnaud, 92380 Garches (FR)
(74) Mandataire: Cabinet Beau de Loménie
(86) Numéro de dépôt international: PCT/FR2015/053111
(87) Numéro de publication internationale: WO 2016/079422

(56) Documents cités:
- CN-U- 201 970 658
- CN-U- 202 711 186
- CN-Y- 200 988 363
- US-A1- 2013 194 242
- US-A1- 2013 322 952

## Description

### DOMAINE DE L'INVENTION

L'invention concerne un dispositif manuel comprenant un embout pour écran capacitif. Un tel embout pour écran capacitif est capable d'interférer/interagir avec l'écran capacitif de sorte que sa présence en un point donné dudit écran capacitif est détectable par ce dernier. Par exemple, l'écran capacitif est un écran de tablette multimédia ou de téléphone portable.

### ETAT DE LA TECHNIQUE ANTERIEURE

Pour utiliser un écran capacitif, un stylet pour écran capacitif est souvent nécessaire. Néanmoins, un tel stylet est un instrument spécifique présentant une unique tête pour un écran capacitif prédéterminé, et est onéreux.

US2013/0194242 divulgue un dispositif manuel selon le préambule de la revendication 1. CN 202711186 divulgue un stylo. US2013/0322952 divulgue un stylet multifonction, CN200988363 divulgue un portemine multifonction et CN201970658 divulgue un stylo multifonction.

### PRESENTATION DE L'INVENTION

Le présent exposé concerne un dispositif manuel.

Un mode de réalisation concerne un dispositif manuel comprenant un corps, ledit dispositif manuel comprenant au moins un embout inversable monté sur le corps, l'embout inversable comprenant une première tête et une deuxième tête opposée à la première tête, l'embout étant configuré pour être monté sur le corps dans une première position où la première tête fait saillie du corps tandis que la deuxième tête est escamotée à l'intérieur du corps ou dans une deuxième position dans laquelle la deuxième tête fait saillie du corps tandis que la première tête est escamotée à l'intérieure du corps, l'embout comprenant une douille externe conductrice et une pièce interne disposée à l'intérieur de la douille tandis que la première tête comprend un premier coussinet pour écran capacitif, la première tête et la deuxième tête étant bloquées entre la pièce interne et la douille tandis que la pièce interne est assemblé par encliquetage avec la douille, la première tête et la deuxième tête faisant saillie de la douille, le dispositif manuel comprenant un système d'encliquetage (ou deuxième système d'encliquetage) pour monter l'embout dans la première position et/ou dans la deuxième position, ledit système d'encliquetage présentant au moins un premier relief formé sur la douille et au moins un deuxième relief formé sur le corps et configuré pour coopérer avec le premier relief par complémentarité de forme, la douille étant en contact électrique avec le corps au moins par l'intermédiaire du système d'encliquetage lorsque l'embout est dans la première position et/ou dans la deuxième position.

Par la suite, et sauf indication contraire, par le terme « conducteur » ou « conductrice » on comprend « conducteur/conductrice de courant électrique ». Inversement, par la suite, et sauf indication contraire, par le terme « isolant » ou « isolante » on comprend « isolant/isolante vis-à-vis du courant électrique ».

Par la suite, et sauf indication contraire par « douille » on entend « douille externe conductrice ».

On comprend que lorsque l'embout est monté sur le corps dans la première position, la première tête est utilisable tandis que lorsque l'embout est monté sur le corps dans la deuxième position c'est la deuxième tête qui est utilisable. Lorsqu'une tête est utilisable, l'autre tête est disposée dans le corps. En d'autres termes, le corps est au moins partiellement creux et configuré pour recevoir la première ou la deuxième tête respectivement dans la deuxième ou première position de l'embout. Ainsi, le corps permet de « ranger » une tête lorsque l'autre tête est utilisable. Le corps sert de protection de ladite tête ainsi rangée. Au sens de l'invention, le terme « corps » désigne de manière générale l'ensemble de tous les éléments qui ne font pas partie de l'embout.

Le corps forme en tout ou partie une partie de préhension du dispositif manuel. L'embout est configuré pour que l'utilisateur puisse le monter sur le corps dans la première ou dans la deuxième position. Ainsi, on peut, selon son choix, monter l'embout sur le corps dans la première ou dans la deuxième position, et utiliser le dispositif manuel en le manipulant par le corps pour utiliser la tête faisant saillie du corps ainsi sélectionnée.

L'embout ayant deux têtes, la première tête comprenant un coussinet pour écran capacitif, on peut utiliser le dispositif manuel avec un écran capacitif avec la première tête, tandis que la deuxième tête permet d'utiliser le dispositif manuel par exemple pour une autre utilisation. Par exemple, la deuxième tête peut comprendre une gomme pour effacer une écriture, ou un corps de friction pour faire changer de couleur, en général rendre invisible, une écriture à base d'encre thermochromique.

On comprend que le coussinet (en anglais « pad ») est une terminaison configurée pour interagir avec un écran capacitif. Le coussinet est conducteur de courant électrique (grâce à son matériau de fabrication, ou grâce à un revêtement). La forme, la souplesse/rigidité et le/les matériaux d'un coussinet ne sont pas limités dans la mesure où ce coussinet est capable d'interagir avec un écran capacitif, c'est-à-dire que son contact avec un écran capacitif est détectable par ce dernier.

Ainsi, le dispositif manuel est plus polyvalent, ou moins spécifique, que les dispositifs connus de l'état de la technique. Un tel dispositif manuel forme un dispositif « deux en un », présentant deux « outils » en un seul dispositif. Le coût global d'un tel dispositif est moindre que le coût cumulé de deux dispositifs classiques distincts formant chacun un « outil » équivalent à une des têtes.

Par ailleurs, on comprend que la douille présente un logement interne recevant au moins en partie la première tête et la deuxième tête. La douille étant conductrice, par exemple en métal, en plastique chargé en noir de carbone ou en fibres métalliques, en plastique recouvert d'un revêtement conducteur tel que de la peinture, du vernis ou une couche métallique déposée par métallisation sous vide, on peut facilement établir un contact électrique d'une part entre la première tête/premier coussinet et/ou la deuxième tête et la douille, et d'autre part entre la douille et au moins une partie du corps.

On comprend également qu'un assemblage par encliquetage (ou clipsage) est un mode d'assemblage de deux parties par engagement et déformation élastique (en général déformation locale, par exemple d'une languette, ou par déformation de l'ensemble des pièces impliquées dans l'assemblage). Lorsque les deux parties sont engagées dans la position d'encliquetage, les parties ont généralement repris leur forme initiale et ne présentent plus de déformation élastique (ou une déformation élastique moindre). Lorsque les deux parties sont engagées l'une avec l'autre dans la position d'encliquetage, elles coopèrent l'une avec l'autre de manière à s'opposer aux, voire bloquer, les mouvements relatifs desdites pièces dans le sens du dégagement (sens opposé au sens de l'engagement). En position d'encliquetage, les deux parties peuvent en outre coopérer de manière à s'opposer à, voire bloquer, leurs mouvements relatifs dans le sens du prolongement de l'engagement, au-delà de la position d'encliquetage.

Bien entendu l'assemblage par encliquetage peut être irréversible, c'est-à-dire qu'une fois que les deux pièces sont encliquetées il n'est plus possible de les séparer l'une de l'autre, ou réversible, c'est-à-dire que les pièces peuvent être assemblées ou séparées à volonté. Un encliquetage irréversible facilite l'assemblage pendant la fabrication tout en étant particulièrement fiable et robuste à l'usage, tandis qu'un assemblage réversible permet une grande souplesse d'utilisation, notamment pour le remplacement ou vérification des pièces pendant la vie du dispositif.

Un assemblage par encliquetage présente l'avantage d'être facile à mettre en oeuvre, fiable et peu couteux.

Par exemple, pour encliqueter la douille avec la pièce interne, le dispositif manuel comprend un premier système d'encliquetage présentant au moins un premier relief sur la surface interne de la douille et au moins un deuxième relief formé sur la surface externe de la pièce interne et configuré pour coopérer avec le premier relief par complémentarité de forme.

On comprend donc que la pièce interne est encliquetée avec la douille tout en bloquant la première tête et la deuxième tête vis-à-vis de la douille. En d'autres termes, les têtes sont enserrées entre la pièce interne et la douille. Bien entendu, on comprend que le blocage est opéré selon au moins un degré de liberté (i.e. en translation et/ou en rotation), mais pas nécessairement selon tous les degrés de liberté. Par exemple les têtes peuvent être bloquées selon les trois degrés de liberté en translation mais rester libres selon un degré de liberté en rotation.

Grâce à cette structure d'assemblage, lorsqu'on assemble la pièce interne avec la douille, on bloque en même temps la première tête et la deuxième tête entre la douille et la pièce interne.

Une telle structure d'assemblage présente un nombre relativement réduit de pièces tout en étant fiable et robuste, ce qui la rend particulièrement bien adapté pour une production industrielle à grande échelle et à coût réduit.

On comprend que le système d'encliquetage permet de monter l'embout dans la première position uniquement ou dans la deuxième position uniquement, ou bien dans la première et dans la deuxième position. Bien entendu, le système d'encliquetage entre la douille et le corps est un système d'encliquetage réversible permettant de changer la position de l'embout à volonté. Un tel système d'encliquetage permet une utilisation particulièrement facile et conviviale du dispositif manuel tout en permettant un assemblage entre la douille et le corps fiable, robuste et à un coût de fabrication réduit.

Dans certains modes de réalisation, la deuxième tête comprend un deuxième coussinet pour écran capacitif. On comprend que le deuxième coussinet est distinct du premier coussinet.

Dans certains modes de réalisation, le premier coussinet est différent du deuxième coussinet.

Par exemple les premier et deuxième coussinets sont différents par leurs tailles et/ou surfaces de contact avec un écran capacitif, et/ou formes, et/ou matériaux, et/ou rigidités, etc.

Le dispositif manuel présente ainsi deux coussinets distincts permettant d'utiliser des écrans capacitifs différents. La polyvalence du dispositif manuel pour utiliser les écrans capacitifs est ainsi accrue. Par exemple la surface de contact des premier et deuxième coussinets sont adaptées à des écrans capacitifs présentant différents degrés de précision. Ainsi, on utilise par exemple le coussinet présentant la plus grande surface de contact avec un écran capacitif de tablette multimédia, tandis qu'on utilise le coussinet présentant la plus petite surface de contact avec un écran capacitif de téléphone portable, l'écran d'une tablette multimédia étant généralement moins précis qu'un écran de téléphone portable.

Dans certains modes de réalisation, le premier coussinet est en contact électrique avec au moins une partie du corps lorsque l'embout est monté dans la première position.

Dans certains modes de réalisation, le deuxième coussinet est en contact électrique avec au moins une partie du corps lorsque l'embout est monté dans la deuxième position.

Par « au moins une partie du corps » on entend toute pièce du dispositif manuel ne faisant pas partie de l'embout. Par exemple, cette pièce est une pièce extérieure du dispositif manuel, par exemple une partie de préhension, ou une pièce intérieure du dispositif manuel.

Le contact électrique entre le premier/deuxième coussinet et le corps, ou une partie du corps, peut être direct ou indirect. Ainsi, selon une variante, le premier/deuxième coussinet contacte directement une partie du corps. Selon une autre variante, le premier/deuxième coussinet est en contact électrique avec le corps ou une partie de corps via une pièce intermédiaire, par exemple via la pièce interne et/ou la douille.

Un tel contact électrique permet de s'assurer qu'un écran capacitif est sensible à la présence du premier/deuxième coussinet lorsque l'utilisateur manipule le dispositif manuel avec sa main et approche ledit coussinet de l'écran capacitif.

Dans certains modes de réalisation, le corps présente au moins une partie conductrice, le premier/deuxième coussinet étant en contact électrique avec au moins la partie conductrice du corps lorsque l'embout est monté dans la première/deuxième position.

Selon une variante, la partie conductrice est une partie de préhension du corps. Selon une autre variante, la partie conductrice est une partie interne du corps (i.e. qui n'est pas destinée à être directement maintenue par la main d'un utilisateur), par exemple une tige conductrice interne. Selon encore une autre variante, le corps présente une partie conductrice interne et une partie de préhension conductrice.

Dans certains modes de réalisation, la douille s'étend selon une direction axiale, et une tête parmi la première tête et la deuxième tête coopère axialement avec un premier épaulement délimitant axialement une première portion axiale de douille et une deuxième portion axiale de douille, ladite tête s'étendant dans la première portion axiale de douille en faisant saillie de la douille.

La douille présente, selon la direction axiale, une première portion et une deuxième portion. La première et la deuxième portion de la douille sont séparées par un premier épaulement. Une des deux têtes est montée par emmanchement dans la douille, et plus particulièrement dans la première portion axiale de douille, et coopère avec le premier épaulement, par exemple en butée ou en appui. Un tel montage permet de facilement établir un contact électrique entre ladite tête et la douille.

Dans certains modes de réalisation, ladite tête comprend une embase formant épaulement coopérant avec le premier épaulement de manière à établir un contact électrique entre ladite tête et la douille.

L'embase comprend la partie de ladite tête qui est configurée pour coopérer avec le premier épaulement. Par exemple, l'embase est conductrice et coopère en appui avec le premier épaulement. La douille étant également conductrice, le contact électrique est ainsi établi. Selon une variante, l'embase n'est pas conductrice mais présente au moins une partie de contact qui coopère avec le premier épaulement, ou une partie de contact complémentaire du premier épaulement. Selon une autre variante, l'embase est conductrice et présente au moins une partie de contact.

Dans certains modes de réalisation, l'embase est enserrée axialement entre le premier épaulement et la pièce interne.

Un tel assemblage permet d'assurer un montage mécanique simple et efficace de la première tête avec la douille tout en assurant un contact électrique.

Dans certains modes de réalisation, l'autre tête parmi la première tête et la deuxième tête comprend un coussinet pour écran capacitif, ledit coussinet étant monté sur la pièce interne de manière à être en contact électrique avec la douille.

Dans le cas où ladite autre tête est la première tête, alors ledit coussinet est le premier coussinet. Dans le cas où ladite autre tête est la deuxième tête, alors ledit coussinet est le deuxième coussinet. Le contact entre le coussinet et la douille peut être direct, le coussinet touchant physiquement la douille, ou indirect, par exemple par l'intermédiaire de la pièce interne ou d'une autre pièce. Lorsque le coussinet est en contact direct avec la douille, on limite le nombre de contact entre pièces distinctes, ce qui diminue le risque de disfonctionnement.

Dans certains modes de réalisation, la douille comprend une jupe, le coussinet de ladite autre tête étant au moins en partie emmanché dans la jupe et en contact avec la jupe.

On comprend que le coussinet est emmanché dans la jupe tout en faisant saillie de la jupe pour pouvoir utiliser ledit coussinet. Le coussinet est en contact avec la douille via la jupe de la douille. Dans certains modes de réalisation, la jupe forme une seule et même pièce avec la douille. Selon une variante, au moins une partie du coussinet est enserrée entre la jupe et la pièce interne, grâce à quoi un contact direct entre la jupe et le coussinet est assuré.

Dans certains modes de réalisation, la douille et la pièce interne s'étendent selon une direction axiale, au moins une extrémité axiale de la pièce interne étant insérée dans une tête.

On comprend que la pièce interne comprend deux extrémités axiales opposées selon la direction axiale, une seule extrémité axiale pouvant être insérée dans une seule tête, ou bien chaque extrémité axiale étant insérée dans une tête. L'insertion d'une extrémité axiale de la pièce interne dans une tête permet de faciliter le blocage de ladite tête entre la pièce interne et la douille. Ceci permet également d'ajuster les caractéristiques de la tête, par exemple dans le cas où la tête comprend un coussinet, ceci permet d'ajuster sa rigidité et/ou de limiter l'amplitude de sa déformation pendant son utilisation sur un écran capacitif.

Dans certains modes de réalisation, ladite extrémité axiale coopère par complémentarité de forme avec tout ou partie de la tête.

Ceci permet d'optimiser la coopération entre la tête et la pièce interne.

Dans certains modes de réalisation, le corps s'étend selon une direction axiale et présente une première extrémité distale sur laquelle l'embout est monté.

On comprend que lorsque la douille s'étend selon une direction axiale, la direction axiale du corps et la direction axiale de l'embout sont parallèles. Préférentiellement, le corps et la douille sont coaxiaux selon la direction axiale. Un corps longitudinal (i.e. s'étendant selon une direction axiale) présente une ergonomie avantageuse pour manipuler un embout pour écran capacitif.

Dans certains modes de réalisation, le corps présente une deuxième extrémité distale opposée à la première extrémité distale, la deuxième extrémité distale présentant une pointe d'écriture ou équivalent.

Par exemple, la pointe d'écriture ou équivalent est une pointe de stylo bille, une pointe de stylo feutre, une pointe de mine de crayon, une pointe rigide pour écran résistif, un pointe de poinçon, ou tout autre embout de dispositif manuel.

Ainsi, le dispositif manuel forme un dispositif « trois en un », la première extrémité portant l'embout inversable tandis que la deuxième extrémité présente la pointe d'écriture ou équivalent.

Selon encore un autre exemple, un autre embout inversable selon l'invention est monté sur la deuxième extrémité distale. Le dispositif manuel forme ainsi un dispositif « quatre en un ».

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente un premier mode de réalisation d'un dispositif manuel vu en perspective, l'embout étant monté sur le corps dans une première position,
- la figure 2 représente le dispositif manuel de la figure 1, l'embout étant monté sur le corps dans une deuxième position,
- la figure 3 représente une vue détaillée de l'extrémité distale du dispositif manuel portant l'embout, l'embout étant déconnecté,
- la figure 4 représente la même vue que la figure 1 où l'embout est représenté en éclaté,
- la figure 5 représente la même vue que la figure 2 où l'embout est représenté en éclaté,
- la figure 6 représente une vue en coupe axiale partielle du dispositif manuel, l'embout étant monté dans la première position, et
- la figure 7 représente une vue en coupe axiale partielle du dispositif manuel, l'embout étant monté dans la deuxième position.

### DESCRIPTION DETAILLEE D'EXEMPLES DE REALISATION

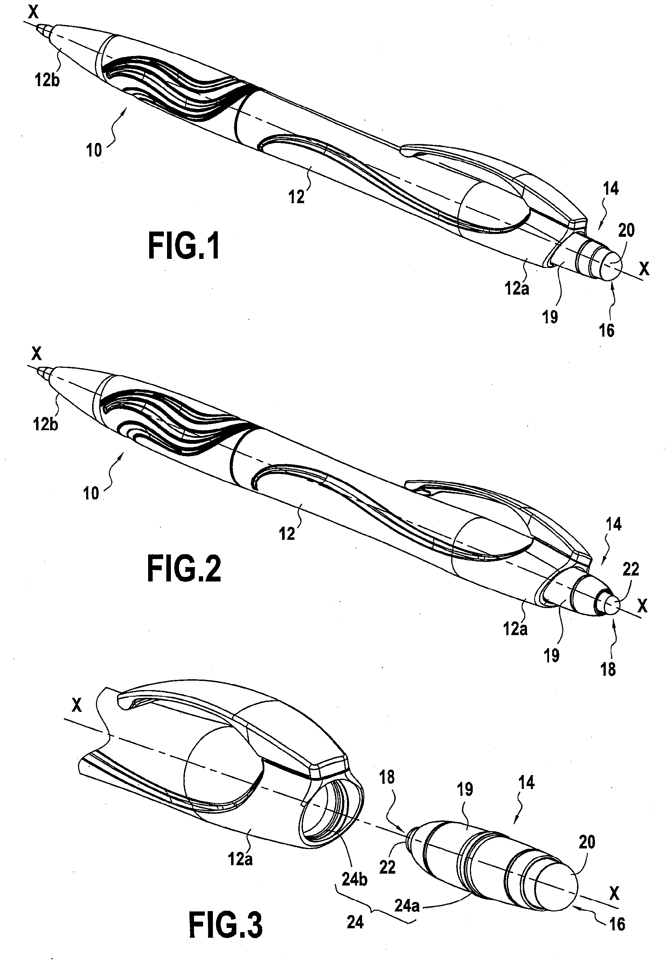

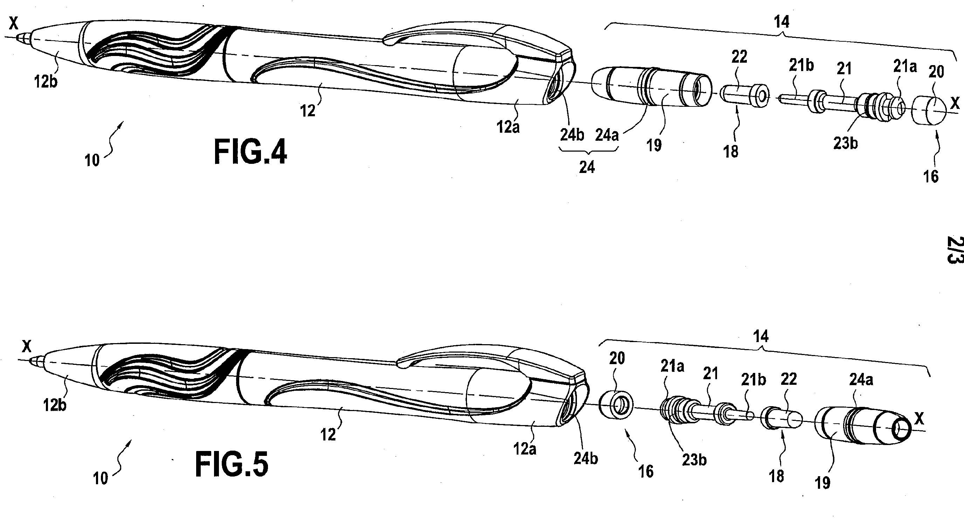

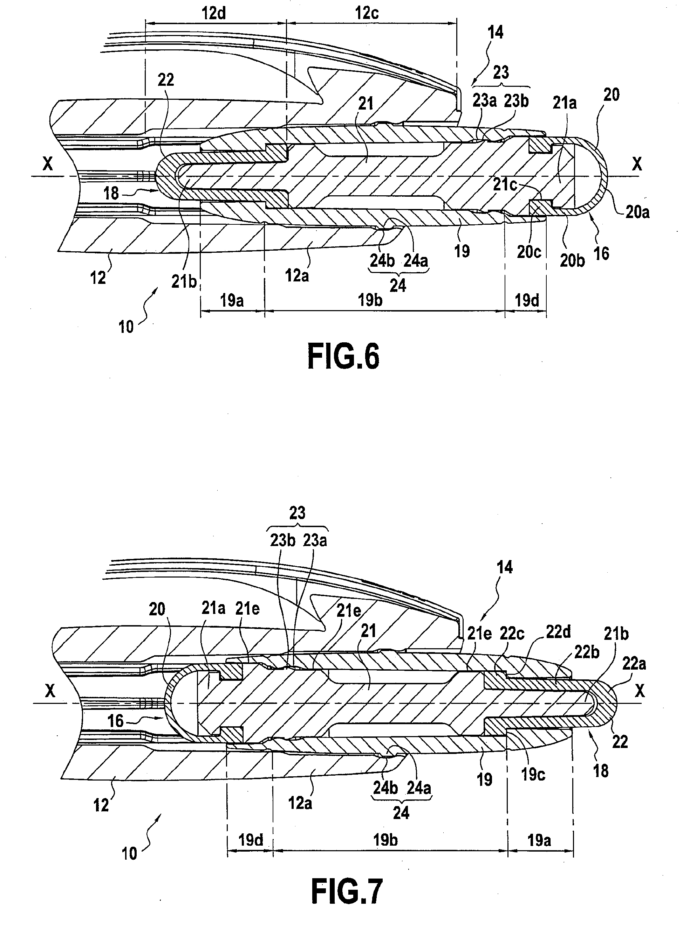

Un mode de réalisation d'un dispositif manuel est décrit en référence aux figures 1 à 7. Sur les figures 1 et 6 l'embout est monté dans la première position tandis que sur les figures 2 et 7 l'embout est monté dans la deuxième position. Cependant, la numérotation d'une position de montage de l'embout comme première ou deuxième position est tout-à-fait arbitraire. Ainsi, on pourrait considérer que les figures 1 et 6 représentent l'embout dans la deuxième position tandis que les figures 2 et 7 représentent l'embout dans la première position. Dans ce dernier cas, la numérotation des têtes, des coussinets, etc. serait également inversée par rapport à la description qui suit.

Le dispositif manuel 10 comprend un corps 12 s'étendant longitudinalement selon une direction axiale X, le corps 12 présentant une première extrémité distale 12a et une deuxième extrémité distale 12b opposée selon la direction axiale X à la première extrémité distale 12a.

La première extrémité distale 12a est équipée d'un embout inversable 14 tandis que la deuxième extrémité distale 12b est équipée d'une pointe d'écriture, dans cet exemple une pointe de stylo bille. Bien entendu selon une variante, la pointe d'écriture peut être une pointe de porte mine, de feutre, ou équivalent. La pointe peut être fixe, ou être rétractable par tout moyen connu par ailleurs par l'homme du métier.

L'embout inversable 14 s'étend longitudinalement selon la direction axiale X et comprend une première tête 16 et une deuxième tête 18 opposée selon la direction axiale X à la première tête 16. L'embout 14 comprend une douille externe conductrice 19, dans laquelle la première tête 16 et la deuxième tête 18 sont emmanchées. Dans cet exemple, la douille 19 est en plastique, et plus particulièrement en ABS (ou Acrylonitrile Butadiène Styrène), chargé en noir de carbone.

Dans la première position de l'embout 14, sur les figures 1 et 6, la première tête 16 fait saillie du corps 12 tandis que la deuxième tête 18 est escamotée dans le corps 12. Inversement, dans la deuxième position de l'embout 14, sur les figures 2 et 7, la deuxième tête 18 fait saillie du corps 12 tandis que la première tête 16 est escamotée dans le corps 12.

La première tête 16 comprend un premier coussinet 20 pour écran capacitif tandis que la deuxième tête 18 comprend un deuxième coussinet 22 pour écran capacitif. Le premier coussinet 20 et le deuxième coussinet 22 sont en matériau conducteur, dans cet exemple en silicone chargé en noir de carbone. Selon une variante, la deuxième tête comprend, par exemple, une gomme ou un corps de friction plutôt qu'un deuxième coussinet, ladite gomme ou corps de friction pouvant présenter la même forme que le deuxième coussinet 22.

Le premier coussinet 20 est monté sur une pièce interne 21. Le premier coussinet 20 présente une extrémité distale 20a de coopération avec un écran capacitif, cette extrémité 20a présentant dans cet exemple une forme sensiblement hémisphérique creuse (voir figure 6). L'extrémité 20a est disposée dans le prolongement d'une partie de fixation 20b de forme sensiblement cylindrique creuse. Cette partie de fixation 20b présente une collerette 20c disposée au voisinage de l'extrémité libre de la partie de fixation 20b, à l'intérieur de la partie de fixation 20b. Cette collerette 20c coopère par encliquetage avec une gorge annulaire 21c ménagée dans une première extrémité axiale 21a de la pièce interne 21. Ainsi, l'extrémité axiale 21a de la pièce interne est insérée dans la première tête 16, dans cet exemple dans le premier coussinet 20. Cette extrémité axiale 21a coopère par complémentarité de forme avec une partie de l'intérieur du premier coussinet 20, dans cet exemple avec l'intérieur de la partie de fixation 20b du premier coussinet 20.

Le deuxième coussinet 22 présente une extrémité distale 22a de coopération avec un écran capacitif, cette extrémité 22a présentant dans cet exemple une forme sensiblement hémisphérique creuse (voir figure 7). L'extrémité 22a est disposée dans le prolongement d'une partie de fixation 22b de forme sensiblement cylindrique creuse. Cette partie de fixation 22b s'étend axialement entre l'extrémité 22a et une embase 22c. L'embase 22c forme une collerette annulaire faisant radialement saillie vers l'extérieur par rapport à la partie de fixation 22b. La face de la collerette de l'embase 22c disposée du côté de la partie de fixation 22b forme un épaulement 22d. Par ailleurs, la deuxième extrémité axiale 21b de la pièce interne 21 (qui est opposée selon la direction axiale à la première extrémité axiale 21a) est insérée dans la deuxième tête 18, dans cet exemple dans le deuxième coussinet 22. Cette extrémité axiale 21b coopère par complémentarité de forme avec l'intérieur du deuxième coussinet 22, dans cet exemple avec l'intérieur de la partie de fixation 22b et de l'extrémité 22a du deuxième coussinet 22.

La douille 19 s'étend selon la direction axiale X et présente dans cet exemple une symétrie de révolution autour de l'axe X. La douille 19 présente une première portion axiale de douille 19a et une deuxième portion axiale de douille 19b. Un premier épaulement 19c délimite axialement la première portion 19a et la deuxième portion 19b. Les première et deuxième portions axiales 19a et 19b sont adjacentes. Le diamètre interne de la première portion axiale 19a est inférieur au diamètre interne de la deuxième portion axiale 19b. A l'opposé de la première portion axiale 19a selon la direction axiale X, la douille 19 présente une jupe 19d adjacente à la deuxième portion axiale 19b. Ainsi, selon la direction axiale X, la douille présente successivement la première portion axiale 19a, la deuxième portion axiale 19b et la jupe 19d. Le diamètre interne de la deuxième portion 19b est inférieur au diamètre interne de la jupe 19d.

La douille 19 présente un premier relief, dans cet exemple une gorge annulaire 23a ménagée dans la surface interne de la deuxième portion 19b. Ce premier relief 23a forme avec un deuxième relief de la pièce interne 21, dans cet exemple une nervure annulaire 23b, un système d'encliquetage 23 (ou premier système d'encliquetage) pour assembler par encliquetage de la douille 19 avec la pièce interne 21. La nervure annulaire 23b et la gorge annulaire 23a coopèrent par complémentarité de forme. Bien entendu, selon une variante la nervure peut être formée sur la surface interne de la douille tandis que la gorge est ménagée dans la surface de la pièce interne. Ainsi, le système d'encliquetage 23, permet un assemblage par encliquetage la pièce interne 21 et de la douille 19.

La deuxième tête 18 s'étend dans la première portion axiale de douille 19a et coopère axialement avec le premier épaulement 19c (voir figure 7). La deuxième tête 18 fait saillie de la première portion axiale de douille 19a. Notamment, dans cet exemple, l'embase 22c, et plus particulièrement l'épaulement 22d coopère axialement avec le premier épaulement 19c de la douille 19. Le deuxième coussinet 22, et plus particulièrement la partie de fixation 22b s'étend axialement dans la première portion axiale 19a tandis que l'extrémité distale 22a du deuxième coussinet 22 fait saillie de la première portion axiale 19a, et donc de la douille 19.

La pièce interne 21 et la douille 19 enserrent l'embase 22c selon la direction axiale X. La pièce interne 21 étant encliquetée avec la douille 19, elle maintient ladite embase 22c en appui contre le premier épaulement 19c. En d'autres termes, la deuxième tête 18, et plus particulièrement dans cet exemple le deuxième coussinet 22, est bloqué entre la douille 19 et la pièce interne 21. Le deuxième coussinet 22 et la douille 19 étant en matériaux conducteurs, grâce à ce montage il y a contact électrique entre la douille 19 et le deuxième coussinet 22 au moins par la coopération en appui entre l'épaulement 22d et le premier épaulement 19c.

Le premier coussinet 20 est fixé sur la pièce interne 21 par l'intermédiaire de la collerette 20c engagée dans la gorge 21c (voir figure 6). La première extrémité axiale 21a de la pièce interne 21 présentant cette gorge 21c s'étend en partie dans la jupe 19d de la douille 19 de manière à ce que la partie de fixation 20b du premier coussinet 20 soit enserrée radialement entre la pièce interne 21 et la jupe 19d. Ainsi, la collerette 20c est bloquée à l'intérieure de la gorge 21c, ce qui verrouille le montage du premier coussinet 20 sur la pièce interne 21. En d'autres termes, la première tête 16, et plus particulièrement dans cet exemple le premier coussinet 20, est bloqué entre la douille 19 et la pièce interne 21. Bien entendu, l'extrémité distale 20a du premier coussinet fait saillie axialement de la jupe 19c, et donc de la douille 19.

La jupe 19d est en contact avec la partie de fixation 20b de premier coussinet 20. La douille 19 et le premier coussinet 20 étant conducteurs, grâce à ce montage il y a contact électrique entre la douille 19 et le premier coussinet 20.

De plus, pour améliorer le maintien des coussinets 20 et 22, la pièce interne 21 présente des portions 21e, dans cet exemple trois portions 21e espacées selon la direction axiale X, dont le diamètre extérieur est sensiblement égal au diamètre intérieur des portions correspondantes de la douille 19 (i.e. les diamètres sont tels qu'ils permettent un emmanchement, ces diamètres étant égaux à plus ou moins 1% à 3% ). En d'autres termes, les portions 21e présentent un diamètre ajusté aux portions correspondantes de la douille 19. Ceci permet un meilleur blocage des coussinets et un assemblage par encliquetage plus robuste. Ainsi, de manière générale, la pièce interne 21 coopère en tout ou partie par emmanchement par complémentarité de forme avec la douille 19.

Dans cet exemple, la pièce interne 21 est en matériau isolant. Selon une variante, cette pièce interne 21 est en matériau conducteur et participe également au contact électrique entre les premier et deuxième coussinets 20 et 22 et la douille 19, bien que ce ne soit pas sa fonction principale.

La douille 19 présente sur sa périphérie extérieure une nervure annulaire 24a tandis que le corps 12 présente sur sa surface interne une gorge annulaire 24b. Cette nervure et cette gorge annulaires 24a et 24b forment des exemples de premier et deuxième reliefs d'un système d'encliquetage 24 entre l'embout 14 et le corps 12 (ou deuxième système d'encliquetage). Bien entendu, selon une variante la gorge peut être formée dans la surface externe de la douille tandis que la nervure est formée sur la surface interne du corps. La nervure 24a et la gorge 24b coopèrent pas complémentarité de forme, et assurent lorsque l'embout 24 est encliqueté avec le corps 12 le contact électrique entre le corps 12 et la douille 14. Ainsi, dans cet exemple les premier et deuxième coussinets 20 et 22 sont directement en contact avec la douille 19, qui elle-même est en contact direct avec le corps 12, la gorge et la nervure 24a et 24b du deuxième système d'encliquetage 24 assurant par leur coopération un contact entre l'embout 14 et le corps 12, de sorte que les coussinets 20 et 22 sont en contact électrique avec le corps 12. Dans cet exemple, le corps 12 est en matériau conducteur, par exemple en plastique, et plus particulièrement en ABS (ou Acrylonitrile Butadiène Styrène), chargé en noir de carbone, de sorte que lorsque l'utilisateur manipule le corps 12, ses doigts sont en contact électrique avec les coussinets 20 et 22, ce qui permet de faire interagir les coussinets avec un écran capacitif.

Pour améliorer le maintien de l'embout 14 au sein du corps 12, l'embout 14 est logé en partie dans une première portion axiale 12c du corps et en partie dans une deuxième portion axiale 12d du corps. La première portion axiale 12c comprend la gorge 24b du système d'encliquetage 24. La deuxième portion axiale 12d est adjacente à la première portion axiale 12c, est disposée du côté de la seconde extrémité distale 12b du corps 12 par rapport à la première portion axiale 12c, et présente un diamètre interne plus petit que le diamètre interne de la première portion axiale 12c. Le diamètre interne de la deuxième portion axiale 12d est ajusté au moins en partie à un diamètre extérieur de l'embout 14, dans cet exemple de la douille 19. La deuxième portion axiale 12d forme ainsi un limiteur de débattement selon une direction perpendiculaire à la direction axiale X. Ceci permet un meilleur maintien de l'embout 14 dans le corps 12 et un assemblage par encliquetage plus robuste.

## Revendications

1. Dispositif manuel (10) comprenant un corps (12), au moins un embout inversable (14) monté sur le corps (12), l'embout inversable (14) comprenant une première tête (16) et une deuxième tête (18) opposée à la première tête (16), l'embout (14) étant configuré pour être monté sur le corps (12) dans une première position où la première tête (16) fait saillie du corps (12) tandis que la deuxième tête (18) est escamotée à l'intérieur du corps (12) ou dans une deuxième position dans laquelle la deuxième tête (18) fait saillie du corps (12) tandis que la première tête (16) est escamotée à l'intérieure du corps (12), l'embout (14) comprenant une douille externe conductrice (19) et une pièce interne (21) disposée à l'intérieur de la douille (19), la première tête (16) et la deuxième tête (18) faisant saillie de la douille (19), la première tête (16) comprenant un premier coussinet (20) pour écran capacitif, **caractérisé en ce que** la première tête (16) et la deuxième tête (18) sont bloquées entre la pièce interne (21) et la douille (19) tandis que la pièce interne (21) est assemblé par encliquetage avec la douille (19), le dispositif manuel comprenant un système d'encliquetage (24) pour monter l'embout (14) dans la première position et/ou dans la deuxième position, ledit système d'encliquetage (24) présentant au moins un premier relief (24a) formé sur la douille (19) et au moins un deuxième relief (24b) formé sur le corps (12) et configuré pour coopérer avec le premier relief (24a) par complémentarité de forme, la douille (19) étant en contact électrique avec le corps (12) au moins par l'intermédiaire du système d'encliquetage (24) lorsque l'embout (14) est dans la première position et/ou dans la deuxième position.

2. Dispositif (10) selon la revendication 1, dans lequel la deuxième tête (18) comprend un deuxième coussinet (22) pour écran capacitif.

3. Dispositif (10) selon la revendication 2, dans lequel le premier coussinet (18) est différent du deuxième coussinet (22).

4. Dispositif (10) selon l'une quelconque des revendications 1 à 3, dans lequel le premier coussinet (20) est en contact électrique avec au moins une partie du corps (12) lorsque l'embout (14) est monté dans la première position.

5. Dispositif (10) selon l'une quelconque des revendications 2, 3, 2 et 4, 3 et 4, dans lequel le deuxième coussinet (22) est en contact électrique avec au moins une partie du corps (12) lorsque l'embout (14) est monté dans la deuxième position.

6. Dispositif manuel (10) selon l'une quelconque des revendications 1 à 5, dans lequel la douille (19) s'étend selon une direction axiale (X), et dans lequel une tête parmi la première tête (16) et la deuxième tête (18) coopère axialement avec un premier épaulement (19c) délimitant axialement une première portion axiale de douille (19a) et une deuxième portion axiale de douille (19b), ladite tête s'étendant dans la première portion axiale de douille (19a) en faisant saillie de la douille (19).

7. Dispositif manuel (10) selon la revendication 6, dans lequel ladite tête comprend une embase (22c) formant épaulement (22d) coopérant avec le premier épaulement (19c) de manière à établir un contact électrique entre ladite tête et la douille (19).

8. Dispositif manuel (10) selon la revendication 7, dans lequel l'embase (22c) est enserrée axialement entre le premier épaulement (19c) et la pièce interne (21).

9. Dispositif manuel (10) selon l'une quelconque des revendications 6 à 8, dans lequel l'autre tête parmi la première tête (16) et la deuxième tête (18) comprend un coussinet (22) pour écran capacitif, ledit coussinet (20) étant monté sur la pièce interne (21) de manière à être en contact électrique avec la douille (19).

10. Dispositif (10) selon la revendication 9, dans lequel la douille (19) comprend une jupe (19d), le coussinet (20) de ladite autre tête étant au moins en partie emmanché dans la jupe (19d) et en contact avec la jupe (19d).

11. Dispositif manuel selon l'une quelconque des revendications 1 à 10, dans lequel la douille (19) et la pièce interne (21) s'étendent selon une direction axiale (X), au moins une extrémité axiale (21a, 21b) de la pièce interne (21) étant insérée dans une tête (16, 18).

12. Dispositif manuel selon la revendication 11, dans lequel ladite extrémité axiale (21a, 21b) coopère par complémentarité de forme avec tout ou partie de la tête (16, 18).

13. Dispositif (10) selon l'une quelconque des revendications 1 à 12, dans lequel le corps (12) s'étend selon une direction axiale (X) et présente une première extrémité distale (12a) sur laquelle l'embout (14) est monté.

14. Dispositif (10) selon la revendication 13, dans lequel le corps (12) présente une deuxième extrémité distale (12b) opposée à la première extrémité distale (12a), la deuxième extrémité distale (12b) présentant une pointe d'écriture ou équivalent.

## Patentansprüche

1. Manuelle Vorrichtung (10), umfassend einen Körper (12), mindestens ein auf den Körper (12) aufgesetztes umkehrbares Endstück (14), wobei das umkehrbare Endstück (14) einen ersten Kopf (16) und einen dem ersten Kopf (16) gegenüberliegenden zweiten Kopf (18) umfasst, wobei das Endstück (14) dazu eingerichtet ist, in einer ersten Position auf den Körper (12) aufgesetzt zu werden, in der der erste Kopf (16) aus dem Körper (12) herausragt, während der zweite Kopf (18) in das Innere des Körpers (12) versenkt ist, oder in einer zweiten Position, in der der zweite Kopf (18) aus dem Körper (12) herausragt, während der erste Kopf (16) in das Innere des Körpers (12) versenkt ist, wobei das Endstück (14) eine leitenden Außenhülse (19) und einen im Inneren der Hülse (19) angeordneten Innenteil (21) umfasst, wobei der erste Kopf (16) und der zweite Kopf (18) aus der Hülse (19) herausragen, wobei der erste Kopf (16) ein erstes Kissen (20) für einen kapazitiven Bildschirm umfasst, **dadurch gekennzeichnet, dass** der erste Kopf (16) und der zweite Kopf (18) zwischen dem Innenteil (21) und der Hülse (19) fixiert sind, während der Innenteil (21) durch Einrasten mit der Hülse (19) montiert wird, wobei die manuelle Vorrichtung zum Aufsetzen des Endstücks (14) in der ersten Position und/oder in der zweiten Position ein Rastsystem (24) umfasst, wobei das Rastsystem (24) mindestens ein an der Hülse (19) ausgebildetes erstes Relief (24a) und mindestens ein zweites Relief (24b) aufweist, das an dem Körper (12) ausgebildet und dazu eingerichtet ist, mit dem ersten Relief (24a) mittels Formschluss zusammenzuwirken, wobei, wenn das Endstück (14) in der ersten Position und/oder in der zweiten Position ist, die Hülse (19) zumindest mittels des Rastsystems (24) mit dem Körper (12) in elektrischem Kontakt steht.

2. Vorrichtung (10) nach Anspruch 1, wobei der zweite Kopf (18) ein zweites Kissen (22) für einen kapazitiven Bildschirm umfasst.

3. Vorrichtung (10) nach Anspruch 2, wobei sich das erste Kissen (18) von dem zweiten Kissen (22) unterscheidet.

4. Vorrichtung (10) nach einem der Ansprüche 1 bis 3, wobei das erste Kissen (20), wenn das Endstück (14) in der ersten Position aufgesetzt ist, mit mindestens einem Teil des Körpers (12) in elektrischem Kontakt steht.

5. Vorrichtung (10) nach einem der Ansprüche 2, 3, 2 und 4, 3 und 4, wobei das zweite Kissen (22), wenn das Endstück (14) in der zweiten Position aufgesetzt ist, mit mindestens einem Teil des Körpers (12) in elektrischem Kontakt steht.

6. Manuelle Vorrichtung (10) nach einem der Ansprüche 1 bis 5, wobei sich die Hülse (19) in einer axialen Richtung (X) erstreckt und wobei entweder der erste Kopf (16) oder der zweite Kopf (18) axial mit einer ersten Schulter (19c) zusammenwirkt, die einen ersten axialen Abschnitt der Hülse (19a) und einen zweiten axialen Abschnitt der Hülse (19b) axial begrenzt, wobei sich der Kopf in dem ersten axialen Abschnitt der Hülse (19a) erstreckt, indem er aus der Hülse (19) herausragt.

7. Manuelle Vorrichtung (10) nach Anspruch 6, wobei der Kopf einen Sockel (22c) umfasst, der eine Schulter (22d) bildet, die mit der ersten Schulter (19c) derart zusammenwirkt, dass zwischen dem Kopf und der Hülse (19) ein elektrischer Kontakt hergestellt wird.

8. Manuelle Vorrichtung (10) nach Anspruch 7, wobei der Sockel (22c) axial zwischen der ersten Schulter (19c) und dem Innenteil (21) eingeklemmt ist.

9. Manuelle Vorrichtung (10) nach einem der Ansprüche 6 bis 8, wobei der andere von entweder dem ersten Kopf (16) und dem zweiten Kopf (18) ein Kissen (22) für einen kapazitiven Bildschirm umfasst, wobei das Kissen (20) derart auf den Innenteil (21) aufgesetzt ist, dass es mit der Hülse (19) in elektrischem Kontakt steht.

10. Vorrichtung (10) nach Anspruch 9, wobei die Hülse (19) einen Kragen (19d) umfasst, wobei das Kissen (20) des anderen Kopfes zumindest teilweise in den Kragen (19d) eingepresst ist und den Kragen (19d) berührt.

11. Manuelle Vorrichtung nach einem der Ansprüche 1 bis 10, wobei sich die Hülse (19) und der Innenteil (21) in einer axialen Richtung (X) erstrecken, wobei mindestens ein axiales Ende (21a, 21b) des Innenteils (21) in einen Kopf (16, 18) eingeführt ist.

12. Manuelle Vorrichtung nach Anspruch 11, wobei das axiale Ende (21a, 21b) durch Formschluss mit dem gesamten oder einem Teil des Kopfes (16, 18) zusammenwirkt.

13. Vorrichtung (10) nach einem der Ansprüche 1 bis 12, wobei sich der Körper (12) in einer axialen Richtung (X) erstreckt und ein erstes distales Ende (12a) aufweist, auf dem das Endstück (14) aufgesetzt ist.

14. Vorrichtung (10) nach Anspruch 13, wobei der Körper (12) ein zweites dem ersten distalen Ende (12a) gegenüberliegendes distales Ende (12b) aufweist, wobei das zweite distale Ende (12b) eine Schreibspitze oder dergleichen aufweist.

## Claims

1. Manual device (10) comprising a body (12), and at least one reversible end piece (14) mounted on the body (12), the reversible end piece (14) comprising a first head (16) and a second head (18) opposite the first head (16), the end piece (14) being designed to be mounted on the body (12) in a first position in which the first head (16) projects from the body (12) while the second head (18) is retracted inside the body (12) or in a second position in which the second head (18) projects from the body (12) while the first head (16) is retracted inside the body (12), the end piece (14) comprising a conductive outer sleeve (19) and an inner part (21) arranged inside the sleeve (19), the first head (16) and the second head (18) projecting from the sleeve (19), the first head (16) comprising a first pad (20) for a capacitive screen, **characterized in that** the first head (16) and the second head (18) are blocked between the inner part (21) and the sleeve (19) while the inner part (21) is snap-fitted to the sleeve (19), the manual device comprising a snap-fitting system (24) for mounting the end piece (14) in the first position and/or in the second position, said snap-fitting system (24) having at least one first raised portion (24a) formed on the sleeve (19) and at least one second raised portion (24b) which is formed on the body (12) and is designed to cooperate with the first raised portion (24a) in a form-fitting manner, the sleeve (19) being in electrical contact with the body (12) at least by means of the snap-fitting system (24) when the end piece (14) is in the first position and/or in the second position.

2. Device (10) according to claim 1, wherein the second head (18) comprises a second pad (22) for a capacitive screen.

3. Device (10) according to claim 2, wherein the first pad (18) is different from the second pad (22).

4. Device (10) according to any of claims 1 to 3, wherein the first pad (20) is in electrical contact with at least part of the body (12) when the end piece (14) is mounted in the first position.

5. Device (10) according to any of claims 2, 3, 2 and 4, 3 and 4, wherein the second pad (22) is in electrical contact with at least part of the body (12) when the end piece (14) is mounted in the second position.

6. Manual device (10) according to any of claims 1 to 5, wherein the sleeve (19) extends in an axial direction (X), and wherein one of the first head (16) and the second head (18) cooperates axially with a first shoulder (19c) that axially delimits a first axial sleeve portion (19a) and a second axial sleeve portion (19b), said head extending into the first axial sleeve portion (19a) while projecting from the sleeve (19).

7. Manual device (10) according to claim 6, wherein said head comprises a base (22c) forming a shoulder (22d) that cooperates with the first shoulder (19c) so as to establish electrical contact between said head and the sleeve (19).

8. Manual device (10) according to claim 7, wherein the base (22c) is clamped axially between the first shoulder (19c) and the inner part (21).

9. Manual device (10) according to any of claims 6 to 8, wherein the other of the first head (16) and the second head (18) comprises a pad (22) for a capacitive screen, said pad (20) being mounted on the inner part (21) so as to be in electrical contact with the sleeve (19).

10. Device (10) according to claim 9, wherein the sleeve (19) comprises a skirt (19d), the pad (20) of said other head being at least partly fitted into the skirt (19d) and in contact with the skirt (19d).

11. Manual device according to any of claims 1 to 10, wherein the sleeve (19) and the inner part (21) extend in an axial direction (X), at least one axial end (21a, 21b) of the inner part (21) being inserted into one head (16, 18).

12. Manual device according to claim 11, wherein said axial end (21a, 21b) cooperates in a form-fitting manner with all or part of the head (16, 18).

13. Device (10) according to any of claims 1 to 12, wherein the body (12) extends in an axial direction (X) and has a first distal end (12a) on which the end piece (14) is mounted.

14. Device (10) according to claim 13, wherein the body (12) has a second distal end (12b) opposite the first distal end (12a), the second distal end (12b) having a writing tip or the like.
